# EUROPEAN PATENT SPECIFICATION

(11) **EP 3 479 042 B1**
(45) Date of publication and mention of the grant of the patent: **20.05.2020**
(21) Application number: 18729765.0
(22) Date of filing: 16.04.2018
(51) Int. Cl.: F28D 1/04, F28D 1/047, F28F 9/02

(54) **A HEAT EXCHANGE UNIT FOR DEVICES WITH A HEAT PUMP, IN PARTICULAR AN EVAPORATOR FOR MANUFACTURING AND STORING ICE**
WÄRMEAUSTAUSCHEINHEIT FÜR VORRICHTUNGEN MIT EINER WÄRMEPUMPE, INSBESONDERE EINEM VERDAMPFER ZUR HERSTELLUNG UND LAGERUNG VON EIS
UNITÉ D'ÉCHANGE DE CHALEUR POUR DISPOSITIFS À POMPE À CHALEUR, PLUS PRÉCISÉMENT UN ÉVAPORATEUR DE PRODUCTION ET DE STOCKAGE DE GLACE

(30) Priority: 24.04.2017 PL 42139317; 30.03.2018 PL 42509718
(43) Date of publication of application: 08.05.2019
(73) Proprietor: Mar-Bud Spólka Z Ograniczona Odpowiedzialnoscia, 03-262 Warszawa (PL)
(72) Inventor: MILA, Miroslaw, 41-902 Bytom (PL); SOCZEWKA, Jan, 08-110 Siedlce (PL)
(74) Representative: Bartula-Toch, Marta
(86) International application number: PCT/PL2018/000038
(87) International publication number: WO 2018/199782

(56) References cited:
- WO-A1-2007/069570
- WO-A2-2013/055519
- WO-A2-2014/036476
- US-A1- 2012 292 004

## Description

The object of the invention is a heat exchange unit for the devices with a heat pump, used in particular as an evaporator in the device for manufacturing and storing ice.

Heat exchange between liquid streams of different temperatures is the basis for the operation of many industrial devices and those used privately in everyday life. The most common are heat exchangers with a partition through which heat exchange occurs with a cross flow of liquids. In addition to, for example, car radiators, boiler furnaces and solar collectors, exchangers are used in refrigeration and air conditioning, in devices with heat pumps, realizing the Linde thermodynamic cycle.

Among many known heat exchangers, solutions with a constructional system called "harp" are often used. For example, such exchangers are described in patent specifications WO 2013055519, US 20120292004 and US 20150122470. The exchangers comprise the inlet collector and the outlet collector, included in the circulation of the thermodynamic medium, which in a parallel and spaced apart position are connected through the perpendicular tubular flow channels. In the exchanger of WO 2013055519 the flow channels are connected to the plate of the radiator, which may be a web sheet having a plurality of grooves tightly adhering to the pipes of the flow channels or after joining together two of such sheets they form a surface unit ensuring good thermal conductivity.

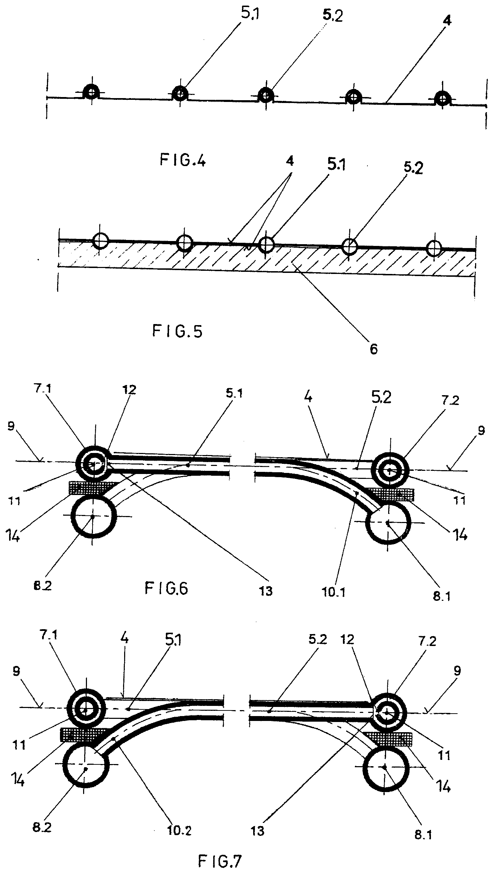

The efficiency of the heat exchanger is primarily dependent on the heat exchange surface and the homogeneous temperature conditions on this surface. In the exchanger of US 2012092004 - in order to ensure the most even flow through all flow channels connected perpendicularly to the inlet collector and the simultaneous occurrence of similar phase transitions therein and in specific places - a tubular nozzle distributor was used, an example of which is described based on Fig. 6. The distributor is inserted longitudinally into the collector and has nozzle orifices directed coaxially to the flow channels along the side. There is a gap between the nozzle orifices and the orifices of the flow channels in the wall of the inlet collector, in which the swirls of the streams are suppressed - which is important especially for the nozzles in the initial section. The nozzle orifices in the wall of the tubular nozzle distributor have diameters increasing successively from the end with the thermodynamic medium supply. The description includes flow rate charts in individual flow channels for an exemplary embodiment of the exchanger. The specification US 20150122470 shows a concept of a tubular nozzle distributor, consisting in shortening the distributor pipe to 1/3 to 3/4 length of the inlet collector and with the blinded end enlarging the last nozzle orifice at the same time. According to the applicant, the prototype made according to the invention showed virtually uniform flow rates in individual flow channels with a preferred reduction in the pressure drop across the outlet collector - which, according to the inventor, resulted in the increase of exchanger efficiency by approximately 15% compared to a conventional solution.

Patent specification JPH 08261518 discloses also an exchanger of the device for manufacturing ice. The radiators of the exchanger arranged horizontally and at intervals above each other are included as evaporators in the thermodynamic circuit of the heat pump. The orifices which help to detach the ice with the flow of heated water after switching the exchanger cycle with the evaporator function on the condenser in the de-icing phase are present in the plates of the radiator, on both sides along the meandering flow channels holes.

In harp exchangers, in particular of high efficiency, the phase transition of the thermodynamic medium starts at the inlet collector, passes through the flow channels and ends at the outlet collector- resulting in the temperature differential on the heat exchange surface. For many devices with a heat pump, uniformity of temperature on the entire exchange surface is very important for their efficiency. For example, in addition to refrigerators, this value is important in ice and chilled water devices for air conditioning.

The heat exchange unit according to the present invention, as in the above-described known solutions, comprises a tubular heat exchanger connected by an inlet collector and an outlet collector into the thermodynamic medium circuit of the heat pump. The collectors located in parallel and at the distance are connected by tubular flow channels perpendicular thereto and are connected together by the plate of the radiator while maintaining the heat conductivity. The tubular nozzle distributor, having many nozzle orifices on the side, directed coaxially to the flow channels, is introduced inwards, along the inlet collector. The nozzle orifices in the tubular nozzle distributors have diameters increasing successively from the end of the thermodynamic medium supply. The essence of the invention lies in the fact that the heat exchange unit consists of two identical heat exchangers incorporated simultaneously in the heat pump circuit. Final sections of the flow channel connections to the outlet collectors are bent off the radiator plane, which is determined by long, straight sections of the flow channels coming out from the inlet collector. The deflection has a dimension greater than half the sum of the outside diameters of the inlet and outlet collectors. The heat exchangers are superimposed so that the straight long sections of their flow channels are alternating with each other in the plane of the radiator and are connected with one, common plate of the radiator. On one side of the unit there is: an inlet collector of the first exchanger and the outlet collector of the second exchanger parallel to each other and on the other side an inlet collector of the second exchanger and an outlet collector of the first exchanger. The nozzle distributors of the first and second heat exchangers are built into the adjacent ends of both inlet collectors.

It is preferred to place an inter-collector insulating strip between the inlet collector and the outlet collector on both sides of the unit, separating the pipelines with various media of different physical state, with different temperatures.

In construction conditions with a horizontal location of the radiator plane, it is preferred that the inlet collectors in both heat exchangers be located above the outlet collectors.

In a further preferred embodiment, the surface between the outlet collectors of the two exchangers is covered by a counter-plate that adheres to the flow channels. The solution with a counter-plate made of a material with a low thermal conductivity coefficient, one-sidedly directs the heat transfer, is particularly useful for a horizontal unit, for example an ice-making device incorporated as an evaporator into the heat pump. The counter-plate made of a material with good thermal conductivity is the condition for two-sided radiation of heat from the flow channels, which is preferred with the vertical construction of the unit.

In the next improvement, pairs of the inlet collectors and outlet collector adjacent to each other on both sides of the unit are longitudinally covered by the edge thermal insulation.

Simultaneous incorporation of two similar harp exchangers into the heat pump circuit, with the flow channels located alternately in one plane and connected with a common radiator plate results in the fact that the thermodynamic medium in adjacent flow channels travels in opposite directions but with locally and longitudinally overlapping isotherms of the temperature field. As a result, a uniform temperature distribution occurs over the entire surface of the radiator plate. High efficiency of the heat exchange unit affects the reduction of overall dimensions. Furthermore, in the horizontal installation of the unit according to the invention, bending down towards the outlet collectors of the final sections of the flow channels causes the oil suspended in the thermodynamic medium - introduced through the compressor - to freely drip into the collector, which, in the next cycle of operation, significantly facilitates the start-up of the device.

A full understanding of the solution according to the invention makes it possible to describe an exemplary implementation of a heat exchange unit which is incorporated as an evaporator into the heat pump circuit in the device for manufacturing and storing ice. The unit is shown in the drawing, whose figures show:
Fig.1 - unit diagram
Fig.2 - unit in a perspective view,
Fig.3 - vertical cross-section through the axis of the flow channel of the first exchanger,
Fig. 4 and Fig. 5 - the middle fragments of the vertical cross-sections of two exemplary embodiments of the heat exchange surface, according to the line A-A in Fig. 2,
Fig.6 - a vertical cross-section of the unit according to the line C-C in Fig. 2 through the axis of the flow channel of the first heat exchanger,
Fig.7 - a vertical cross-section of the unit according to the line D-D in Fig. 2 through the axis of the flow channel of the second heat exchanger,
Fig.8 - a vertical cross-section of the left side of the heat exchange unit, with a counter-plate and edge thermal insulation.

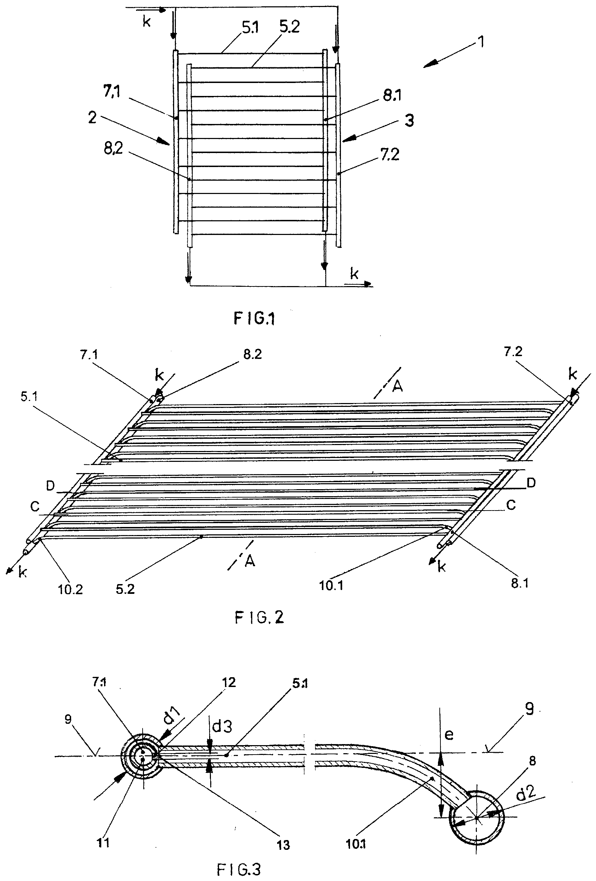

The heat exchange unit 1 consists of two similar tubular heat exchangers 2 and 3 incorporated simultaneously in the circuit of the thermodynamic medium of the heat pump. The unit can perform both the evaporator and condenser functions, working in horizontal or vertical positioning. Each of the exchangers 2 and 3 with a harp system has parallel inlet collector 7 and outlet collector 8 spaced apart. The collectors 7.1 and 8.1 of the first exchanger 2 and the collectors 7.2 and 82. of the second exchanger 3 are connected by numerous tubular flow channels 5,1 and 5.2 located perpendicular. Final sections 10.1 and 10.2 of flow channel connections 5.1 and 5.2 to the outlet collector 8.1, 8.2 are deflected by a dimension (e) greater than half the sum of the outside diameters d1 of the inlet collector 7.1 and 7.2 and the diameter d2 of the outlet collector 8.1 and 8.2 - as shown in Fig. 3 of the drawing. With superimposing the exchangers 2 and 3, the inlet collector 7.1 of the first exchanger 2 and the outlet collector (8.2) of the second exchanger 3 are located parallel to each other on both sides of the heat exchange unit 1 and on the other side the inlet collector 7.2 of the second exchanger 3 and the outlet collector 8.1 of the first exchanger 2. The flow channels 5.1 and 5.2 are connected - while maintaining good thermal conductivity - by the plate of the radiator 4 made of a material with high thermal conductivity coefficient between the inlet collectors 7.1 and 7.2 of both exchangers 2 and 3. Tubular nozzle distributors 11, having many nozzle orifices 12 on the side, directed coaxially to the inlets 13 of the flow channels 5.1 and 5.2, are introduced longitudinally to the inside of the inlet collectors 7.1 and 7.2. The diameters d3 of the nozzle orifices 12 increase successively from the end of the thermodynamic medium supply. Inter-collector insulating strips 14 which thermally separate the pipelines through which fluids of different temperatures flow are introduced on both sides of the unit between the inlet collectors 7.1, 7.2 and the outlet collectors 8.1, 8.2.

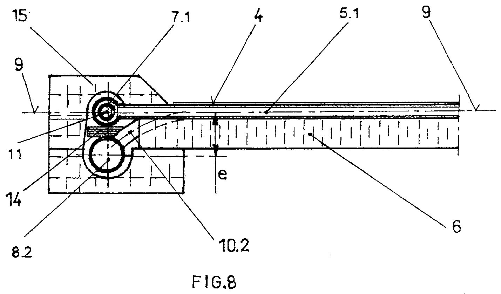

In conditions shown in Fig. 6 and 7 and with horizontal installation of the heat exchange unit, the inlet collectors 7.1 and 7.2 in both heat exchangers 2 and 3 are arranged above the outlet collectors 8.1 and 8.2. Fig. 8 shows the implementation of the unit incorporated into the heat pump circuit as an evaporator, installed horizontally, where the surface between the outlet collectors 8.1 and 8.2 of both exchangers 2 and 3 is covered by a counter-plate 6 of thermally insulating material. Grooves including the flow channels 5.1 and 5.2 are performed in the counter-plate 6, which allows the counter-board 6 to adhere to the plate of the radiator 4. Using the unit in the ice-making device is supplemented by the incorporation of edge thermal insulations 15, comprising pair of the inlet collectors 7.1, 7.2 and outlet collectors 8.2, 8.1 adjacent longitudinally to each other on both sides. In the operation of the device - uniformity of temperature over the entire surface of the radiator, obtained as a result of local equalization of the amount of heat supplied to the radiator by contiguous counter-current flows of thermodynamic media in the phases of physical transition with a constant parameter difference - is essential for the production efficiency and storage capacity of the ice in the device.

### List of indications in the figure

1. heat exchange unit
2. first heat exchanger
3. second heat exchanger
4. plate of the radiator
5. flow channels
   5.1 flow channels of the first exchanger
   5.2 flow channels of the second exchanger
6. counter-plate
7. inlet collector
   7.1 inlet collector of the first exchanger
   7.2 inlet collector of the second exchanger
8. outlet collector
   8.1 outlet collector of the first exchanger
   8.2 outlet collector of the second exchanger
9-9 radiator plane
10. flow channel final section
   10.1 flow channel final section of the first exchanger
   10.2 flow channel final section of the second exchanger
11. tubular nozzle distributor
12. nozzle orifice
13. flow channel inlet
14. inter-collector insulating strip
15. edge thermal insulation
e. the dimension of the inlet collector offset relative to the outlet collector
d1. outside diameter of the inlet collector
d2. outside diameter of the outlet collector
d3. diameter of the nozzle orifice
k. the flow direction of the thermodynamic medium

## Claims

1. **A heat exchange unit for devices with a heat pump, in particular an evaporator in** a **device for manufacturing and storing ice,** comprising a heat exchanger (2,3) included in a thermodynamic medium circuit through an inlet collector (7.1, 7.2) and an outlet collector (8.1, 8.2), which in a parallel position are connected through a perpendicular tubular flow channels (5.1, 5.2) and connected with a plate of the radiator (4), moreover, wherein a tubular nozzle distributor (11), having many nozzle orifices (12) on the side, directed coaxially to the flow channels (5), and whose diameters d3 increase successively from an end of a thermodynamic medium supply is inserted longitudinally to the inside of the inlet collectors (7.1, 7.2), **characterized in that** the unit consists of two similar heat exchangers (2, 3) for being incorporated simultaneously in the heat pump circuit, where the flow channels (5.1, 5.2) have the final sections (10.1, 10.2) of the connections to the outlet collector (8.1, 8.2) bent off the radiator plate (9-9) - determined by long, straight sections of the flow channels (5.1, 5,2) coming out from the inlet collector (7.1, 7.2) - by a dimension (e) greater than half the sum of the outside diameters (d1, d2) of the inlet (7.1, 7.2) and outlet (8.1, 8.2) collector, the heat exchangers (2, 3) being superimposed so that the straight long sections of the flow channels (5.1, 5.2) alternate with each other in the plane of the radiator (9-9) and are connected with one, common plate of the radiator (4), the inlet collector (7.1) of the first exchanger (2) and the outlet collector (8.2) of the second exchanger (3) are located parallel to each other on both sides of such unit and on the other side the inlet collector (7.2) of the second exchanger (3) and the outlet collector (8.1) of the first exchanger (2), moreover, the nozzle distributors (11) of the first (2) and second exchanger (3) are built into the adjacent ends of both inlet collectors (7.1, 7.2).

2. **A heat exchange unit** according to claim 1, **characterized in that** an inter-collector insulating strip (14) is introduced on both sides of the unit between the inlet collectors (7.1, 7.2) and the outlet collector (8.1, 8.2) of the exchangers (2, 3).

3. **A heat exchange unit** according to claim 1, **characterized in that** in construction conditions with a horizontal location of the radiator plane (9-9), the inlet collectors (7.1, 7.2) in both heat exchangers (2, 3) are located above the outlet collectors (8.1, 8.2).

4. **A heat exchange unit** according to claim 1 or 2 or 3, **characterized in that** the surface between the outlet collectors (8.1, 8.2) of both exchangers (2, 3) is covered by a counter-plate (6) that adheres to the flow channels (5.1, 5.2).

5. **A heat exchange unit** according to claim 4, **characterized in that** in construction conditions with a horizontal location of the radiator plane (9-9), the counter-plate is made of a material with a low thermal conductivity coefficient.

6. **A heat exchange unit** according to claim 1 or 2 or 3 or 5, **characterized in that** the areas of adjacent pairs of the inlet collector (7.1, 7.2) and outlet collector (8.2, 8.1), on both sides of the unit (1), are longitudinally covered by an edge thermal insulation (15).

## Patentansprüche

1. **Wärmeaustauscheinheit für Wärmepumpenanlagen, insbesondere für den Verdampfer von *Ei*serzeugungs- und -speichereinrichtungen,** die einen Wärmeaustauscher (2, 3) enthält, der in den Kreislauf des thermodynamischen Mediums durch den Einlassverteiler (7.1, 7.2) und den Auslassverteiler (8.1, 8.2) integriert ist, die parallel durch senkrechte Strömungskanäle (5.1, 5.2) verbunden sind und durch eine Heizkörperplatte (4) verbunden sind, oben, wo ein rohrförmiger Düsenverteiler (11) in Längsrichtung in den Einlassverteiler (7.1, 7.2) eingesetzt ist, der auf der Seite des Düsenverteilers (11) viele koaxial zu den Strömungskanälen (5) gerichtete Düsenbohrungen (12) aufweist und dessen Durchmesser (d3) vom Ende der Zufuhr des thermodynamischen Mediums aus sukzessive zunimmt, **ist dadurch gekennzeichnet, dass** die Baugruppe aus zwei identischen besteht, parallele Wärmetauscher (2, 3), die in den Wärmepumpenkreislauf integriert sind, bei denen die Strömungskanalabschnitte (5.1, 5.2) Endabschnitte (10.1, 10.2) der Anschlüsse an den Auslassverteiler (8.1, 8.2) haben, die von der Heizkörperebene (9-9) - bestimmt durch gerade Abschnitte der aus dem Einlassverteiler (7.1, 7.2) herausführenden Strömungskanalabschnitte (5.1, 5.2) um eine Abmessung gebogen sind, die größer als die Hälfte der Summe der Außendurchmesser (d1, d2) der Einlassverteiler (7.1, 7.2) und Auslassverteiler (8.1, 8.2) ist, wobei die Wärmeaustauscher (2, 3) so übereinander angeordnet sind, dass ihre geraden, langen Strömungskanalabschnitte (5.1, 5.2) abwechselnd in der Heizkörperebene (9-9) liegen und durch eine einzige, gemeinsame Heizkörperplatte (4) verbunden sind, und auf beiden Seiten einer solchen Anordnung parallel und übereinander liegen: der Einlassverteiler (7.1) des ersten Austauschers (2) und der Auslassverteiler (8.2) des zweiten Austauschers (3), und auf der anderen Seite der Einlassverteiler (7.2) des zweiten Austauschers (3) und der Einlassverteiler (8.1) des ersten Austauschers (2), und die Düsenverteiler (11) des ersten (2) und zweiten Austauschers (3) sind in die benachbarten Enden beider Einlassverteiler (7.1, 7.2) eingebaut.

2. Die **Wärmeaustauscheinheit** nach Patentanspruch 1 ist **dadurch gekennzeichnet, dass** auf beiden Seiten der Einheit, zwischen dem Einlassverteiler (7.1, 7.2) und dem Auslassverteiler (8.1, 8.2) der Austauscher (2, 3) ein Zwischensammler-Isolierstreifen (14) vorhanden ist.

3. Die **Wärmeaustauscheinheit** nach Patentanspruch 1 ist **dadurch gekennzeichnet, dass** bei Einbaubedingungen mit horizontaler Lage der Heizkörperebene (9-9) die Einlassverteiler (7.1, 7.2) in beiden Wärmetauschern (2, 3) oberhalb der Auslassverteiler (8.1, 8.2) angeordnet sind.

4. Die **Wärmeaustauscheinheit** nach Patentanspruch 1 oder 2 oder 3 **ist dadurch gekennzeichnet, dass** der Bereich zwischen den Auslassverteiler (8.1, 8.2) der beiden Wärmeaustauscher (2, 3) durch eine Antiplatte (6) abgedeckt ist, die an den Strömungskanälen (5.1, 5.2) haftet.

5. Die **Wärmeaustauscheinheit** nach Patentanspruch 4, ist **dadurch gekennzeichnet, dass** bei den Einbaubedingungen mit horizontaler Lage der Heizkörperebene (9-9) die Antiplatte (6) aus einem Material mit niedrigem Wärmeleitfähigkeitskoeffizienten besteht.

6. Die **Wärmeaustauscheinheit** gemäß Einheit 1 oder 2 oder 3 oder 5, **ist dadurch gekennzeichnet, dass** die Zonen benachbarter Paare von Einlassverteiler (7.1, 7.2) und Auslassverteiler (8.2, 8.1) auf beiden Seiten der Einheit (1) mit einer Längsrandwärmedämmung (15) abgedeckt sind.

## Revendications

1. **Système d'échange de chaleur pour les dispositifs de pompe à chaleur, en particulier l'évaporateur d'un dispositif de production et de stockage de *glace,*** contenant un échangeur thermique (2,3) connecté au circuit du facteur thermodynamique avec un collecteur d'admission (7.1, 7.2) et un collecteur d'échappement (8.1, 8.2), qui en position en parallèle, ils sont reliés par des canaux d'écoulement perpendiculaires (5.1, 5.2) et soudés ensemble avec une plaque du radiateur (4), en plus auquel le distributeur de buse tubulaire (11) est inséré longitudinalement à l'intérieur du collecteur d'admission (7.1, 7.2), ayant une pluralité des trous de buse sur la surface latérale (12) dirigés coaxialement aux canaux d'écoulement (5), dont les diamètres (d3) augmentent successivement à partir de l'extrémité de l'alimentation du facteur thermodynamique, **caractérisé en ce que** le système se compose de deux échangeurs de chaleur identiques connectés en parallèle au circuit de pompe à chaleur (2, 3), dans lequel les canaux d'écoulement (5.1, 5.2) ont des sections finales (10.1, 10.2) des connexions au collecteur d'échappement (8.1, 8.2) courbées par rapport au plan du radiateur (9-9) - déterminé par les sections droites des canaux d'écoulement (7.1, 7.2) sorties du collecteur d'admission (5.1, 5.2) - par dimension (e) supérieure à la moitié de la somme des diamètres collecteurs externes (d1, d2) d'admission (7.1, 7.2) et d'échappement (8.1, 8.2), les échangeurs de chaleur (2, 3) étant superposés de sorte que leurs longues sections droites de canaux d'écoulement (5.1, 5.2) soient adjacentes en alternance les uns avec les autres dans le plan du radiateur (9-9) et reliés par une plaque de radiateur commune (4), et des deux côtés d'un tel ensemble sont situés en parallèle et au-dessus les uns des autres: le collecteur d'admission (7.1) du premier échangeur (2) et le collecteur d'échappement (8.2) du deuxième échangeur (3) et de l'autre côté le collecteur d'admission (7.2) du deuxième échangeur (3) et le collecteur d'admission (8.1) du premier échangeur (2), ainsi que les distributeurs de buses (11) du premier (2) et du deuxième échangeur (3)) sont insérés dans les extrémités voisines des deux collecteurs d'admission (7.1, 7.2).

2. **Système d'échange de chaleur** selon la revendication 1, **caractérisé en ce qu'**il y a une bande isolante intercollectrice(14) sur des deux côtés du système entre le collecteur d'admission (7.1, 7.2) et le collecteur d'échappement (8.1, 8.2), des échangeurs (2, 3).

3. **Système d'échange de chaleur** selon la revendication 1, **caractérisé en ce que** dans les conditions de construction avec l'emplacement horizontal du plan du radiateur (9-9), des collecteurs d'admission (7.1, 7.2) dans les deux échangeurs de chaleur (2, 3) sont placés au-dessus des collecteurs d'échappement (8.1, 8.2).

4. **Système d'échange de chaleur** selon la revendication 1, 2 ou 3, **caractérisé en ce que la surface** entre les collecteurs d'échappement (8.1, 8.2) des deux échangeurs de chaleur (2, 3) est obscurci par l'anti-plaque(6) adjacente aux canaux d'écoulement (5.1, 5.2).

5. **Système d'échange de chaleur** selon la revendication 4, **caractérisé en ce que** dans les conditions de construction avec l'emplacement horizontal du plan du radiateur(09/09) l'anti-plaque (6) est faite d'un matériau ayant un faible coefficient de conductivité thermique.

6. **Système d'échange de chaleur** selon la revendication 1 ou 2 ou 3 ou 5, **caractérisé en ce que** les zones des paires adjacentes du collecteur d'admission (7.1, 7.2) et du collecteur d'échappement (8.2, 8.1) des deux côtés de l'unité (1) sont couverts longitudinalement par l'isolation thermique de bord (15).
